# EUROPEAN PATENT SPECIFICATION

(11) **EP 3 181 655 B1**
(45) Date of publication and mention of the grant of the patent: **05.02.2020**
(21) Application number: 15201371.0
(22) Date of filing: 18.12.2015
(51) Int. Cl.: C09K 8/58, B01D 17/02, B01D 61/14, B01D 63/02, C02F 1/44, E21B 21/06

(54) **METHOD FOR RECOVERING OIL AND VISCOSIFYING POLYMERS IN POLYMER-FLOOD PRODUCED WATER**
VERFAHREN ZUR RÜCKGEWINNUNG VON ÖL UND VISKOSIFIZIERUNGSPOLYMEREN IN POLYMERFLUTPRODUZIERTEM WASSER
PROCÉDÉ DE RÉCUPÉRATION D'HUILE ET DE POLYMÈRES DE VISCOSIFICATION D'EAU PRODUITE PAR INJECTION DE POLYMÈRES

(43) Date of publication of application: 21.06.2017
(73) Proprietor: SUEZ Groupe, 92040 Paris la Défense Cedex (FR)
(72) Inventor: SUTTON-SHARP, Emilie, 75018 PARIS (FR)
(74) Representative: IPAZ

(56) References cited:
- EP-A1- 0 022 357
- WO-A1-2012/136064
- WO-A1-2014/133619
- WO-A2-2010/090889
- US-A1- 2006 037 746
- US-A1- 2014 262 254
- SHUBO DENG ET AL: "Produced water from polymer flooding process in crude oil extraction: characterization and treatment by a novel crossflow oil-water separator", SEPARATION AND PURIFICATION TECHNOLOGY, vol. 29, no. 3, 1 December 2002 (2002-12-01), pages 207-216, XP55277625, NL ISSN: 1383-5866, DOI: 10.1016/S1383-5866(02)00082-5

## Description

The present invention concerns a method for recovering oil and viscosifying polymers in produced water issued from an oil and gas field.

The exploration and production of oil and gas generates a large quantity of water. The world average is 3 barrels (477 l) of water for each barrel (159 l) of oil produced and this ratio increases over the lifetime of the producing wells. In mature oil fields where the reservoir pressure has reduced to the point that oil cannot be produced from the reservoir naturally, the oil needs to be removed by injecting a substance into the reservoir to displace oil towards a producing well and maintain reservoir pressure.

Water is used as an injection fluid because it is immiscible with oil and will displace it, allowing more oil to be recovered from the reservoir. Produced water is produced as a byproduct along with the Oil and Gas. Produced water is an oil/water/solid mixture.

This process is known as Enhanced Oil Recovery (EOR) and more specifically water flooding EOR if only water is injected in the oil bearing formation, chemical EOR when water and chemicals are injected, low salinity EOR when low salinity water is injected and steam EOR when water is injected as steam. The water source for the enhanced oil recovery process can be aquifer water, surface water, seawater or recycled produced water.

In some chemical EOR technique, a high-molecular-weight and viscosity-enhancing polymer, such as partially hydrolysed polyacrilamide (HPAM), can be added to the waterflood to decrease the mobility of the flood and, as a consequence, improve the sweep efficiency of the waterflood and result in improved oil recovery and the generation of polymer-flood produced water (PFPW) at the producing well.

Oil & Gas companies are increasingly looking at reusing produced water for injection in the oil bearing formation to reduce their environmental footprint and their water management costs. This option requires a comprehensive treatment process to avoid plugging the reservoir and the injection equipment with the undesired compounds contained in the produced water such as suspended solids, oil and scale forming dissolved solids.

In addition to the complicated chemistry of produced water, the polymer used to sweep oil toward production wells is resulting in the generation of polymer-flood produced water (PFPW) with a high viscosity, since most of the polymer remains in the produced water. The produced water from the polymer flooding is therefore more difficult to treat than from conventional Oil&Gas well operations.

Because of its high viscosity, conventional produced water treatment methods, such as flotation, gravity separation or liquid/liquid hydrocyclones are not effective.

Deng et al. in Separation and Purification Technology, vol. 29, no. 3, pages 207-216 describe a method for recovering oil from a polymer flooding process in crude oil extraction using a crossflow oil-water separator, which contains a coalescence section.

Recently developed polymer-flood produced water treatment techniques teach mostly breaking the polymer chain to reduce produced water viscosity.

United State Patent Application US 2012/0108473 is directed to a process for treatment of produced water obtained from an enhanced oil recovery process using polymers, wherein an oxidizing agent is injected into produced water in a quantity such that the viscosity of said water is reduced to a value below 2 cps in a short period of less than 5 hours from the injection of the oxidizing agent, and a reducing agent is then injected in the necessary quantity to neutralize all the resulting excess oxidizing agent.

This method has the following disadvantages:
- oxidizing the polymer rather than keeping it in the water phase for reuse induces a chemical loss for the oilfield service company,
- to overcome interference with the numerous contaminants naturally present in produced water, the oxidizing agent needs to be significantly overdosed to break-up the viscosifying polymer which induces high oxidizing agent consumption costs,
- after oxidation, the oil can't be recovered from the produced water which induces a revenue loss for the Oil & Gas operator.

Therefore, there is a need for a more economic and efficient process for treating polymer-flood produced water and recovering oil and viscosifying polymers.

The present invention relates to a method for recovering pure oil stream and viscosifying polymers in polymer-flood produced water issued from an oil and gas field.

The method of invention comprises:
- a first step of directing the produced water to a membrane coalescing contactor,
- a second step of recovering :
   ∘ the pure oil stream from the membrane of said membrane coalescing contactor and ;
   ∘ deoiled viscosified water containing residuals of viscosifying polymers remaining outside the membrane.

The term "produced water" means water produced as a byproduct along with crude oil or gas exploration and production, especially water brought to the surface in an oil or gas recovery process.

The physical and chemical properties of produced water vary considerably depending on the geographic location of the field, the geological formation from which it comes, and the type of hydrocarbon product being produced. The major constituents in produced water are suspended solids, dissolved solids, such as carbonate/bicarbonate, sulfate, silica and scale forming divalent ions, and organic compounds, such as aliphatic hydrocarbons and aromatic hydrocarbons.

The method of invention can especially be applied for treating a viscosified produced water.

The term "viscosified produced water" means produced water containing back produced polymer and obtained as byproduct after polymer flooding enhanced recovery process.

The method of invention allows the separation of oil with other contents of produced water by coalescence and enables the recovery of a deoiled water stream containing viscosifying polymers but free of oil.

Coalescence of oil/water emulsion is a process whereby two or more oil droplets become joined together forming larger droplets with the ultimate separation of the emulsion into two phases (oil and water).

Coalescence process has been used for separating oil from water. Since the polymers used in polymer-flood enhanced oil recovery are water-soluble, they remain in the water phase and are also separated from oil after coalescing step.

The term "membrane coalescing contactor" is referred to a device containing non-dispersive hydrophobic hollow fiber or tubular membranes which are able to coalesce oil from polymer-flood produced water on the first surface of membrane and collect a stream of coalesced oil from the second surface of membrane.

Said membrane comprises microporous hollow fiber membranes, selected from polyethylene, polypropylene, polyolefms, polyvinyl chloride (PVC), amorphous Polyethylene terephthalate (PET), polyolefin copolymers, poly(etheretherketone) type polymers, surface modified polymers, mixtures or combinations thereof. The surface modified polymers comprise polymers modified chemically at one or more halogen groups or by corona discharge or ion embedding techniques.

Different from coalescence contactor containing a serial of plates made of polymer, wherein oil droplet is coalesced on the surface of plates but cannot pass through the plates, oil droplets coalesced on the first surface of hollow fiber membrane can pass through the membrane and be collected on the other surface of membrane. Consequently, compared to coalescence contactor containing a serial of plates made of polymer, a membrane coalescing contactor exhibits a higher packing density of the coalescing media and a better oil-water separation due to the microporous nature of the membrane.

In a preferred embodiment, the membrane coalescing contactor used in the present invention is the device described in WO 2013/188837.

It is to be noted that the present invention does not exclude the embodiments wherein there is at least one supplementary step between the first step and the second step.

In an embodiment, the second step of recovering is carried out by out-in crossflow.

The term "out-in crossflow" means that the feed flood passes tangentially along the surface of the membrane to avoid particles contained in the polymer flood produced water to plug the contactor.

The method of the invention can be used for recover viscosifying polymers selected from a polyacrylamide, such as partially hydrolysed polyacrylamide, or a biopolymer such as xanthan gum or guar gum.

In an embodiment, the method of invention comprises a polishing step after the second step.

Said polishing step can be any conventional polishing step for removing a specific content in produced water obtained after the second step, such as polymers, dissolved solids and/or water soluble oil. For example, oxidation process can be used to destroy viscosifying polymers and water soluble oil, filtration can be used to remove the viscosifying polymers. Dissolved solids can be removed by Reverse Osmosis.

In another embodiment, the method of invention comprises successively several polishing steps after the second step for removing different kinds of contents in produced water.

The deoiled viscosified water recovered from the step of method of invention may be reinjected in a hydrocarbon bearing formation.

The deoiled viscosified water recovered from polishing step may be reinjected in a hydrocarbon bearing formation or discharged to a surface water body.

A hydrocarbon bearing formation can be an oil and/or gas bearing formation.

In a preferred embodiment, the method of invention is used for recovering the residual of viscosifying polymer, particularly the residual of partially hydrolysed polyacrylamide in polymer-flood enhanced oil recovery.

The present invention concerns also a system for carrying out an above described method for recovering pure oil stream and viscosifying polymers in polymer-flood produced water issued from an oil and gas field.

The system of invention comprises a membrane coalescing contactor and optionally the devices for carrying out one or several polishing steps.

The system of invention may be used for treating produced water from chemical enhanced oil recovery using polymers.

Preferred embodiments of the invention are disclosed in following description and the accompanying drawing which are merely illustrative of such invention.
Figure 1 is schematic illustration of the process of the present invention.
Figure 2A and 2B are schematic illustration of the process of the present invention including polishing step.

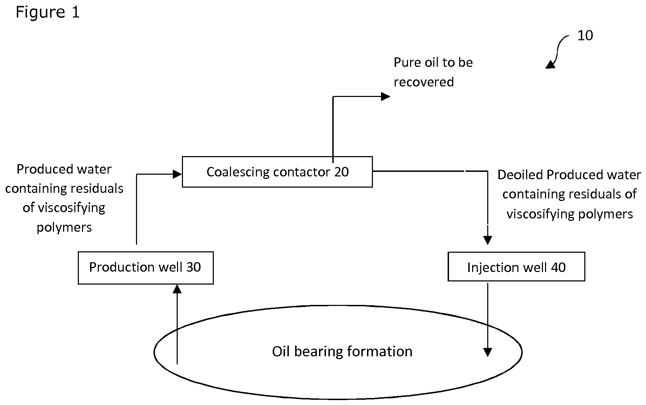

In figure 1, the produced water treatment system of the present invention is indicated generally by the numeral 10. The system includes a coalescing contactor 20. According to the first step of the method of invention, produced water stream containing residuals of viscosifying polymer is directed into coalescing contactor 20. Said produced water stream is generated in oil and gas production well 30 by polymer-flood enhanced oil recovery. According to the second step of the method of invention, deoiled produced water containing residuals of viscosifying polymers issued from coalescing contactor 20 is reinjected in an oil bearing formation via injection well 40. Pure oil recovered from coalescing contactor 20 in the second step is collected.

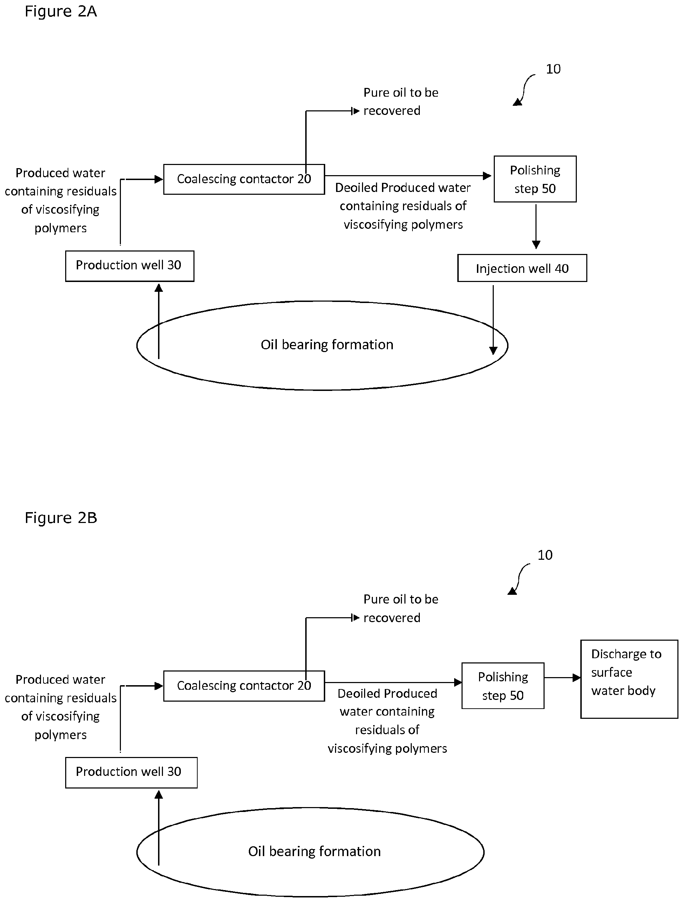

In figures 2A and 2B, the produced water treatment system 10 includes a membrane coalescing contactor 20. According to the first step of the method of invention, produced water stream containing residuals of viscosifying polymer is directed into the membrane coalescing contactor 20. Said produced water stream is generated in oil and gas production well 30 by polymer-flood enhanced oil recovery. According to the second step of the method of invention, deoiled produced water issued from coalescing contactor 20 is directed to polishing step 50 then reinjected in an oil bearing formation via injection well 40 (figure 2A) or discharged to surface water body (figure 2B). Pure oil recovered from coalescing contactor 20 in the second step is collected.

## Claims

1. A method for recovering pure oil stream and viscosifying polymers in polymer-flood produced water issued from an oil and gas field, comprising:
- a first step of directing the polymer-flood produced water to a membrane coalescing contactor (20),
- a second step of recovering :
∘ the pure oil stream from the membrane of said membrane coalescing contactor and ;
∘ deoiled viscosified water containing residuals of viscosifying polymers remaining outside the membrane.

2. The method according to claim 1, wherein the second step of recovering is carried out by out-in crossflow coalescence.

3. The method according to claim 1 or 2, wherein said method comprises a polishing step (50) after the second step.

4. The method according to any one of claim 1 to 3, wherein deoiled viscosified water recovered from the second step of this method is reinjected in a hydrocarbon bearing formation (40).

5. The method according to any one of claim 1 to 3, wherein deoiled viscosified water recovered from the polishing step is reinjected in a hydrocarbon bearing formation (40) or discharged to a surface water body.

6. The method according to any one of claims 1 to 5, wherein the residuals of viscosifying polymer are partially hydrolysed polyacrylamide.

7. System (10) for carrying out a method for recovering pure oil stream and viscosifying polymers in polymer-flood produced water issued from an oil and gas field according to any one of claims 1 to 6.

8. Use of the system of claim 7 for treating produced water from chemical enhanced oil recovery using polymer.

## Patentansprüche

1. Verfahren zur Rückgewinnung von reinem Ölstrom und Viskosifizierungspolymeren in polymerflutproduziertem Wasser, aus einem Öl- und Gasfeld stammend, mit:
- einem ersten Schritt zum Leiten des polymerflutproduzierten Wassers zu einem Membrankoaleszenzkontaktor (20),
- einem zweiten Schritt zum Rückgewinnen:
∘ des reinen Ölstroms von der Membran des Membrankoaleszenzkontaktors, und
∘ des entölten viskosifizierten Wassers, das Rückstände von Viskosifizierungspolymeren enthält, die außerhalb der Membran bleiben.

2. Verfahren nach Anspruch 1, wobei der zweite Schritt zum Rückgewinnen durch Aus-Ein-Querstrom-Koaleszenz durchgeführt wird.

3. Verfahren nach Anspruch 1 oder 2, wobei das Verfahren nach dem zweiten Schritt einen Aufbesserungsschritt (50) umfasst.

4. Verfahren nach einem der Ansprüche 1 bis 3, wobei das in dem zweiten Schritt dieses Verfahrens rückgewonnene entölte viskosifizierte Wasser in eine kohlenwasserstoffführende Formation (40) reinjiziert wird.

5. Verfahren nach einem der Ansprüche 1 bis 3, wobei das in dem Aufbesserungsschritt rückgewonnene entölte viskosifizierte Wasser in eine kohlenwasserstoffführende Formation (40) reinjiziert wird oder zu einem Oberflächenwasserkörper abgeführt wird.

6. Verfahren nach einem der Ansprüche 1 bis 5, wobei die Rückstände des Viskosifizierungspolymers teilweise hydrolisiertes Polyacrylamid sind.

7. System (10) zum Durchführen eines Verfahrens zur Rückgewinnung von reinem Ölstrom und Viskosifizierungspolymeren in polymerflutproduziertem Wasser, aus einem Öl- und Gasfeld stammend, nach einem der Ansprüche 1 bis 6.

8. Verwendung des Systems nach Anspruch 7 zur Aufbereitung von produziertem Wasser aus chemisch verbesserter Ölrückgewinnung unter Verwendung eines Polymers.

## Revendications

1. Procédé de récupération d'un courant de pétrole pur et de polymères viscosifiants dans de l'eau produite par injection de polymères émise depuis un champ de pétrole et de gaz, comprenant :
- une première étape d'orientation de l'eau produite par injection de polymères vers un contacteur coalescent de membrane (20),
- une seconde étape de récupération :
∘ du courant de pétrole pur à partir de la membrane dudit contacteur coalescent de membrane et ;
∘ de l'eau viscosifiée déshuilée contenant des résidus de polymères viscosifiants restant en dehors de la membrane.

2. Procédé selon la revendication 1, dans lequel la seconde étape de récupération est réalisée par une coalescence à flux transversal d'entrée-sortie.

3. Procédé selon la revendication 1 ou 2, dans lequel ledit procédé comprend une étape de polissage (50) après la seconde étape.

4. Procédé selon l'une quelconque des revendications 1 à 3, dans lequel l'eau viscosifiée déshuilée récupérée à partir de la seconde étape de ce procédé est réinjectée dans une formation contenant des hydrocarbures (40).

5. Procédé selon l'une quelconque des revendications 1 à 3, dans lequel l'eau viscosifiée déshuilée récupérée à partir de l'étape de polissage est réinjectée dans une formation contenant des hydrocarbures (40) ou évacuée dans une masse d'eau de surface.

6. Procédé selon l'une quelconque des revendications 1 à 5, dans lequel les résidus de polymères viscosifiants sont un polyacrylamide partiellement hydrolysé.

7. Système (10) pour réaliser un procédé de récupération d'un courant de pétrole pur et de polymères viscosifiants dans de l'eau produite par injection de polymères émise à partir d'un champ de pétrole et de gaz selon l'une quelconque des revendications 1 à 6.

8. Utilisation du système de la revendication 7 pour traiter de l'eau produite à partir d'une récupération de pétrole améliorée par procédé chimique utilisant un polymère.
